(19) Europäisches Patentamt

European Patent Office

Office européen des brevets

(11) EP 0 973 248 A2

(12) EUROPEAN PATENT APPLICATION

(43) Date of publication:
19.01.2000 Bulletin 2000/03

(51) Int. Cl.⁷: **H02M 5/45**, H02M 1/12, B60L 15/32, B60L 9/00

(21) Application number: 99202298.8

(22) Date of filing: 14.07.1999

(84) Designated Contracting States:
AT BE CH CY DE DK ES FI FR GB GR IE IT LI LU MC NL PT SE
Designated Extension States:
AL LT LV MK RO SI

(30) Priority: 14.07.1998 IT MI981621
13.04.1999 IT MI990762

(71) Applicant: ABB Ricerca SpA
20099 Sesto San Giovanni (MI) (IT)

(72) Inventor: Ottaviani, Gianpaolo
20099 Sesto San Giovanni (MI) (IT)

(74) Representative:
Giavarini, Francesco
ABB Ricerca S.p.A.
Viale Edison, 50
20099 Sesto San Giovanni (MI) (IT)

(54) **Control method for constant-frequency inverter**

(57) A control method for a constant-frequency inverter for supplying isolated loads and/or for exchanging power between a DC power source and the power distribution network, the inverter being connected to said DC power source and having an output transformer and switching means for generating a voltage in output from the inverter, characterised in that it comprises the following steps:

a) acquiring signals which represent the operating state of the inverter

b) determining a first control variable, aimed to address first and second memory means, by virtue of the execution of the following steps:

-- generating a first control signal which is dependent on the operating state of the inverter;

-- generating a second control signal which is dependent on the operating state of the inverter;

c) determining a second control variable, aimed to address said first memory means by virtue of the execution of the following steps:

-- generating a third control signal which is dependent on the operating state of the inverter;

-- generating a fourth control signal which is dependent on the operating state of the inverter;

d) determining a third control variable based on the first and second control variables;

e) determining a fourth control variable based on the first and third control variables;

f) determining, based on said third control variable, the value of the angle of the fundamental sinusoidal characteristic curve of the voltage downstream of the switching means comprised in the inverter;

g) determining a duty-cycle value for controlling the switching means on the basis of the fourth control variable and of the value of the angle of the fundamental sinusoidal curve.

Fig. 1

EP 0 973 248 A2

**Description**

The present invention relates to a control method for a constant-frequency inverter, particularly for supplying isolated loads and/or for exchanging power between a DC power source and the power distribution network.

Many embodiments of inverter control methods for converting electric power from DC to AC at a constant frequency are known in the state of the art.

It is also well known that currently available control methods do not allow the constant-frequency inverters to act both as converters for electric power to be fed into the power distribution network and, in the same time, as power supply for isolated loads.

In fact, a first type of methods relates to the control of constant-frequency impressed-voltage inverters. These methods are particularly suitable for supplying isolated loads but do not allow to connect the inverter in parallel to the power distribution network.

A second type of methods relates to the control of constant-frequency impressed-current inverters. These methods are currently used to reduce the peak in the power demand placed on the power distribution network. This is achieved by virtue of the injection of single-phase or three-phase sinusoidal current into the power distribution network.

Although it is suitable to perform network power recovery, this second type of control methods, being of the impressed-current type, does not allow the inverter to supply isolated loads.

Furthermore, available control methods for constant-frequency inverters for feeding electric power into the power distribution network also do not improve the harmonic content of the voltage at the delivery point, since they merely inject a sinusoidal current, regardless of the distortion of the voltage that is present at their terminals. It should be considered that one of the basic purposes of these control methods is to avoid boosting the distribution of power to small users located far from the backbones of the power distribution network. This is performed despite of the increase in seasonal loads (conditioning systems, refrigerators, et cetera) and of work-related equipment, which increase the daytime power peak. For this reason, it is damaging not to locally correct the distortions in the voltage which are inevitably due to the length and weakness of the lines that supply these users.

The aim of the present invention is to provide a control method for constant-frequency inverters for supplying isolated loads and/or for exchanging power between a DC power source and the power distribution network, which allows to supply isolated loads and, if the inverter is connected in parallel to the power distribution network, to provide a bidirectional exchange of power between the power source of the inverter and the power distribution network.

Within the scope of this aim, an object of the present invention is to provide a control method for constant-frequency inverters which allows, where possible, to recharge the DC power source connected to the inverter by using the electric power supplied by the power distribution network and which allows, in the same time, to perform a network power recovery.

Another object of the present invention is to provide a control method for constant-frequency inverters, for network power recovery and for supplying isolated loads, which allows to use, for supplying the inverter, DC electric power sources even with voltage/current characteristics affected by considerable variations.

Another object of the present invention is to provide a control method which is capable of improving the harmonic content of the output voltage of the inverter at the delivery point.

Another object of the present invention is to provide a control method which implements the function for seeking the optimum working point for which the power source is capable of transmitting the maximum power to the load.

Another object of the present invention is to provide a control method for constant-frequency inverters which is highly reliable and easy to provide and can be implemented at competitive costs.

Thus, the present invention provides a control method for a constant-frequency inverter for supplying isolated loads and/or for exchanging power between a DC power source and the power distribution network, said inverter having at least a DC power source, an output transformer and switching means for generating a voltage in output from said inverter. The control method according to the present invention is characterised in that it comprises the steps that consist in:

a) acquiring signals which represent the operating state of the inverter, said state being definable between the following possible configurations:

- said inverter is connected to the power distribution network;
- said inverter is connected to an isolated load;

b) determining a first control variable aimed to address first and second memory means, said first control variable being determined by virtue of the execution of the following steps:

- generating a first control signal which is dependent on the operating state of the inverter;

- generating a second control signal which is dependent on the operating state of the inverter;

c) determining a second control variable aimed to address said first memory means, said second control variable being determined by virtue of the execution of the following steps:

- generating a third control signal which is dependent on the operating state of the inverter;
- generating a fourth control signal which is dependent on the operating state of the inverter;

d) determining a third control variable based on said first and second control variables;
e) determining a fourth control variable based on said first and third control variables;
f) determining, based on said third control variable, the value of the angle of the fundamental sinusoidal characteristic curve of the voltage downstream of said switching means comprised in said inverter;
g) determining a duty-cycle value for controlling said switching means, based on said fourth control variable and of the value of said angle.

Further characteristics and advantages will become apparent from the description of a preferred embodiment of the method according to the invention, illustrated only by way of non-limitative example in the accompanying drawings, wherein:

figure 1 is a schematic diagram of a single-phase inverter to which the control method according to the invention is applied;
figure 2 is a block diagram useful for illustrating the steps of the control method according to the invention.

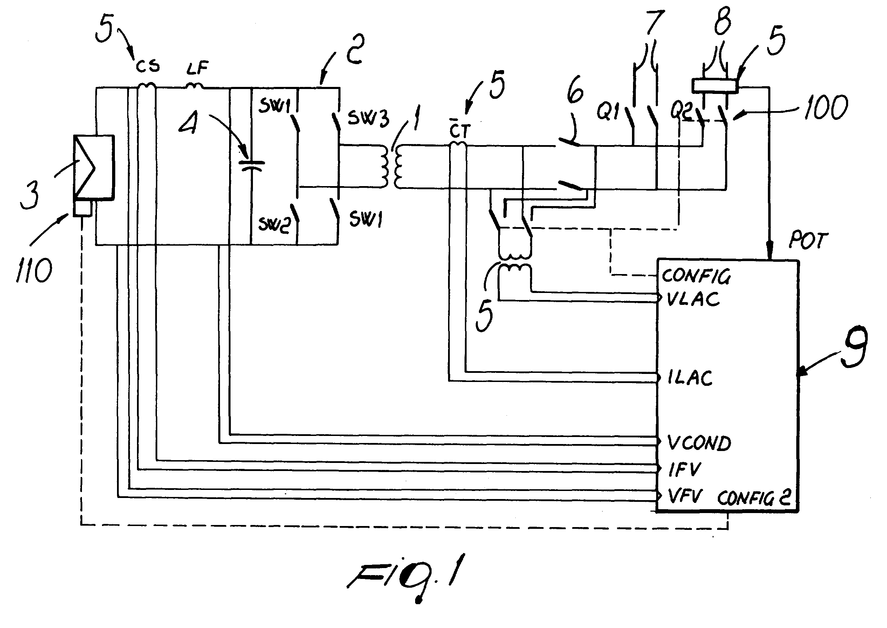

With reference to figure 1, a schematic diagram of a single-phase inverter is provided to which the control method according to the invention is applied. The method according to the invention can also be applied to a three-phase inverter: the case of a single-phase inverter is presented only for the sake of simplicity in description.

The inverter shown schematically in figure 1 is a constant-frequency inverter connected with at least one DC power source 3 and provided with an output transformer 1 and switching means 2 for generating a voltage in output from said inverter. The switching means 2 are constituted, in this case, by a series of switches SW1-SW4 arranged in a bridge configuration.

Preferably, there can be means 4 for filtering the voltage supplied by the power source 3. The inverter shown in figure 1 can be provided with means 5 for acquiring signals that represent the operating state of the inverter.

Said means 5 can be constituted by sensors suitably arranged in one of the configurations well known to those skilled in the art.

In particular, the acquired signals are:

- a signal VFV which represents the output voltage of the power source;
- a signal IFV which represents the output current of the power source;
- a signal VLAC which represents the output voltage of the inverter;
- a signal ILAC which represents the output current of the inverter;
- a signal POT which represents the power level transmitted by the power distribution network;
- a signal VCOND which represents the voltage upstream of the switching means 2;
- a logic signal CONFIG which represents the type of configuration adopted by the inverter.

In a preferred embodiment, the inverter can be furthermore provided with means 110 for acquiring, in the case the inverter is connected to the power distribution network, a logic signal CONFIG2 which indicates the type of the DC power source.

The inverter shown in figure 1 can be furthermore provided with a control unit 9, which implements the control method according to the invention. It is preferably provided with protection switches 6 and with switching means 100 that are capable of connecting the inverter to the power distribution network 8 and/or to a load 7. Said switching means 100 are schematically represented by switches Q1 and Q2.

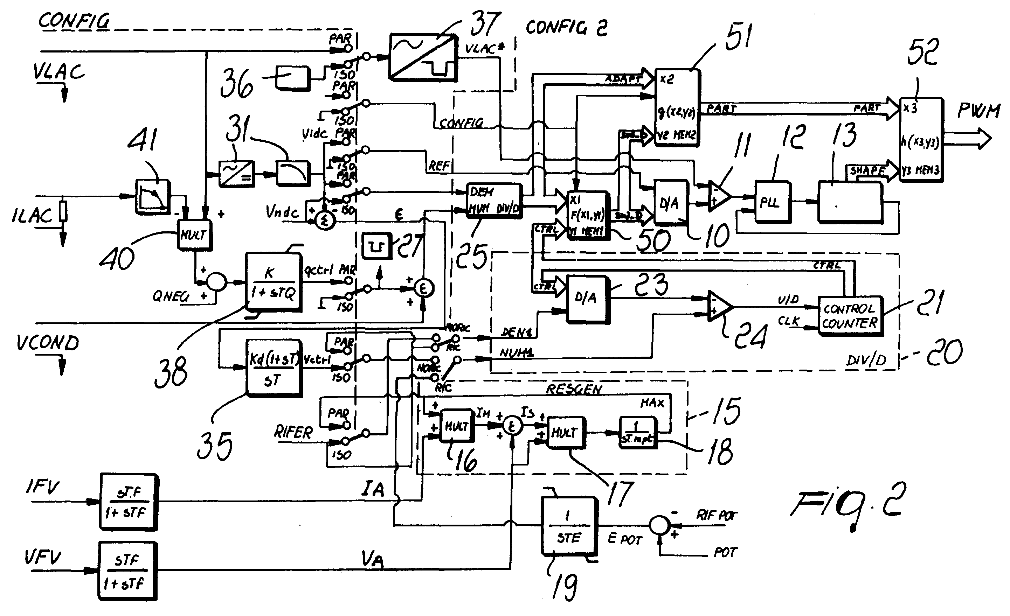

With reference to figure 2, a block diagram is presented which is useful for describing the steps of the control method according to the invention. The steps can performed automatically, for example by the control unit 9.

The method according to the invention provides, at step a), for the acquisition of signals that represent the operating state of the inverter. Said signals are preferably those described above. In particular, the signal CONFIG indicates the type of configuration adopted by the inverter. The configurations that can be adopted by the inverter are:

- inverter connected to an isolated load: this configuration is designated by ISO in figure 2;

- inverter connected in parallel to the power distribution network: in this configuration, designated by PAR in figure 2, the inverter, in addition to being connected to the power distribution network, may of course also be connected to optional loads.

In a preferred embodiment, the control method according to the present invention provides the step a.1) for acquiring the signal CONFIG2, which represents the type of power source. In particular, the following configurations are possible:

- rechargeable power source: this configuration is designated by RIC in figure 2;
- non-rechargeable power source: this configuration is designated by NORIC in figure 2.

The method according to the invention includes the steps b) of determining a first control variable and the step c) of determining a second control variable, which are designated in figure 2 by ADAPT and CTRL respectively. The ADAPT and CTRL control variables are used at step d) to determine a third control variable SIN_D, which is used, together with the variable ADAPT, to determine at step e) a fourth control variable PART. At step f) the value SHAPE of the angle of the fundamental sinusoidal curve of the voltage downstream of the switching means 2 of figure 1 is also determined. In practice, the control method according to the invention consists of a PWM control technique in which the value of the duty-cycle is extracted, at each period of the carrier, from a three-dimensional array as a function of suitable signals that will be described in detail hereinafter.

Said three-dimensional array can be implemented by first memory means 50, second memory means 51 and third memory means 52 suitably connected and addressed. In more detail, first memory means 50 are addressed by control variables ADAPT and CRTL, while second memory means 51 are addressed by control variables ADAPT and SIN_D and third memory means are addressed by control variable PART and the value SHAPE. All said memory means 50, 51 and 52 can be constituted, for example, by EPROM or EEPROM or flash-EPROM memories.

In order to determine each one of the control variables ADAPT and CTRL, steps of generating suitable control signals are provided in both the steps b) and c). Said signals, for determining the control variable ADAPT, are a first and a second control signals designated by DEN and NUM respectively and, for determining the control variable CTRL, a third and a fourth control signals, designated by DEN1 and NUM1 respectively. The signals DEN, NUM, DEN1 and NUM1 are generated according to different criteria which depend on the PAR or ISO configuration of the inverter and/or, if the inverter is connected to the power distribution network, on the type (RIC or NORIC) of the DC power source. Also their sign depends substantially on the type of configuration adopted by the inverter and on the type of power source.

If the inverter is connected to the power distribution network, the generation of the signal DEN for determining the variable ADAPT comprises the following steps:

b.1) acquiring the signal VLAC;
b.2) feeding the signal VLAC to rectifier and filter means 31, obtaining the signal VLDC.
b.3)using the signal VLDC as a signal DEN for determining the variable ADAPT.

Also if the inverter is connected to the power distribution network, the signal NUM is generated in order to determine the variable ADAPT with the contribution of a fine adjustment of the reactive power absorbed by the inverter (step b.4)). Fine adjustment of the absorbed reactive power is particularly important, since it ensures that the voltage in output from the inverter is reduced to zero if disconnection from the power distribution network occurs.

Fine adjustment of the absorbed reactive power occurs according to the following steps:

b.4.1) acquiring the signals ILAC and VLAC;
b.4.2) phase shifting the signal ILAC, preferably with a 90° delay, by virtue of phase shifter means 41;
b.4.3) determining a signal QR which represents the value of the reactive power. This step is obtained by feeding the delayed signal ILAC and the signal VLAC into multiplier means 40;
b.4.4) determining an error signal QE by adding the signal QR to a reference signal QNEG, using the adder block 39. Preferably, the signal QNEG is kept around slightly negative values;
b.4.5) integrating the signal QE, generating a reactive power control signal QCTRL;
b.4.6) monitoring the amplitude of the signal QCTRL by means of an alarm 27.
b.4.7) if the signal QCTRL exceeds a preset threshold, disconnecting the inverter . An excessively high amplitude of the signal QCTRL would in fact indicate that the exchange of reactive power between the inverter and the distribution network is not correct;
b.4.8) if the control signal QCTRL does not exceed said preset threshold, generating a new control signal by acquiring and correcting the signal VCOND with the signal QCTRL.
    Said new control signal is used as a first control signal NUM for determining the control variable ADAPT if the inverter is connected to the power distribution network.

If the inverter is connected to an isolated load, the control method according to the invention provides the following steps for generating the control signal DEN for determining the control variable ADAPT:

b.5) acquiring a reference signal VNDC;

b.6) using the signal VNDC as a control signal DEN for determining the control variable ADAPT.

If the inverter is connected to an isolated load, the generation of the control signal NUM in order to determine the control variable ADAPT occurs according to the following steps:

b.7) acquiring the signal VCOND;

b.8) using the signal VCOND as a control signal NUM for determining the control variable ADAPT.

If the inverter is connected to the power distribution network, the generation of the signals DEN1 and NUM1 for determining the variable CTRL depends essentially on the type of the power source.

In the case of a rechargeable power source, the generation of the signal DEN1 for determining the variable CTRL occurs substantially according to the following steps:

c.1) acquiring a reference voltage RIFER;

c.2) using the signal RIFER as control signal DEN1 in order to determine the control variable CTRL.

In the case of a rechargeable power source, the method according to the invention provides, in the execution of the steps for generating the control signal NUM1 in order to determine the variable CTRL, for management of the power supplied by the power distribution network (step c.3). In practice, the power supplied by the power distribution network in excess with respect to the power required by the load, up to a preset level RIFPOT, is used to recharge said power source. If the power supplied by the power distribution network is not sufficient to supply the load, then the power source supplies the missing electric power to the load.

These functions are achieved by virtue of the following steps:

c.3.1) acquiring a reference signal RIFPOT representing the limit level of power exchanged between the power distribution network and the load;

c.3.2) acquiring the signal POT which represents the actual power supplied by the power distribution network;

c.3.3) generating an error signal EPOT which represents the difference between the reference signal RIFPOT and the signal POT;

c.3.4) integrating, by virtue of integrator means 19, the signal EPOT in order to generate a signal used as a signal NUM1 in order to determine the variable CTRL.

In the case of a non-rechargeable power source, the method according to the invention entails calculating the variable DEN1 in order to determine the variable CTRL, so as to obtain the optimum working point at which the power source is capable of transmitting the maximum power to the load. This function is particularly suitable in the case of photovoltaic sources or other DC power sources having voltage/current characteristics affected by large variations. It is provided by virtue of the following steps (block 15 of figure 2):

c.4) acquiring the signals IFV and VFV, which are subjected to filtering of a high-pass type, so as to maintain the values of the alternating components (step c.5). The filtered signals representing the output current and voltage of the inverter are designated by IA and VA in figure 2;

c.6) feeding the signal IA to first multiplier means 16;

c.7) feeding second multiplier means 17 with the signal VA and the signal IS obtained by adding the signal IM in output from said first multiplier means 17 and said signal VA;

c.8) integrating, by virtue of integrator means 18, the output signal of said multiplier means 17 in order to generate a signal RESGEN used as a control signal DEN1 suitable to determine the control variable CTRL. The signal RESGEN is returned in input to said first multiplier means 16.

The sequence of proposed steps is based on the following considerations. The voltage and the current of the non-rechargeable power source, particularly in the case of a photovoltaic array, can be expressed as a sum of its mean value and of a superimposed alternating component (for example a 100-Hz sinusoidal ripple if the network frequency is 50 Hz). Accordingly, $VFV = VFV0 + vfv$ and $IFV = IFV0 + ifv$, where $VFV0$ and $IFV0$ are the mean values and $vfv$ and $ifv$ are the alternating components of the voltage and current in output from the non-rechargeable source, respectively.

If RS is the equivalent resistance of the power source, the following relation applies for the alternating components:

$$vfv \cdot (vfv+RS \cdot ifv)=0 \tag{1}$$

If no parasitic capacitor CP were present, then relation (1) would be true at all times.

However, a parasitic capacitor CP can be always present and it entails a phase shift between vfv and ifv. Accordingly, relation (1) is no longer true at all times but remains true if it is averaged over the period T of the sinusoidal component. Accordingly, one can say that:

$$\int_0^T vfv \cdot (vfv+RS \cdot ifv)dt=0 \tag{2}$$

It can be noticed that if the resistance RS is underestimated, then the component $vfv^2$ prevails and the integral is positive; if RS is overestimated, the integral is negative. When the integral is positive, the signal RESGEN of figure 2 is increased; otherwise it is decreased. A balance is reached when the signal RESGEN = RS . If the time constant RS $\cdot$ CP is small, then at the output of the integrator, after a few seconds, one has a signal whose value is RESGEN and on which a ripple is superimposed which has twice the frequency of the power distribution network but has a negligible amplitude.

On the basis of these observations, it can be noticed that the maximum power point is reached spontaneously.

It is sufficient to set the integrator so that the signal RESGEN has a maximum value which corresponds to a current absorption, on the part of the inverter, equal to the absorption of a resistor whose value is RESGEN.

Since the differential resistance of the generator tends to increase, although not in a linear manner, as the current delivered by the power source increases, initially RESGEN > RS and accordingly the integrator tends to reduce its output. This fact decreases the value assumed by the signal RESGEN, which is matched by an increase in the differential resistance of the generator. When the value of RESGEN = RS , then the maximum power point has been reached and the integrator remains in equilibrium.

In the case of a non-rechargeable power source, the method according to the invention calculates the variable NUM1 in order to determine the variable CTRL according to the following steps:

c.9) generating a reference signal RIFER;
c.10) using said signal RIFER as a signal NUM1 to determine the variable CTRL.

If the inverter is connected to an isolated load, the control signal DEN1 for determining the variable CTRL is generated according to the following steps:

c.11) acquiring a reference signal, for example the signal RIFER;
c.12) using the signal RIFER as a signal DEN1 for determining said control variable CTRL.

The generation of the control signal NUM1 for determining the variable CTRL instead occurs according to the following steps:

c.13) acquiring a signal VLAC;
c.14) rectifying and filtering the signal VLAC;
c.15) adding the signal VLDC to a reference signal VNDC, obtaining an error signal;
c.16) integrating said error signal, obtaining a signal VCTRL to be used as a control signal NUM.

The method according to the invention uses substantially identical steps to determine the control variables ADAPT or CTRL. The steps related to the generation of the control variable CTRL, shown in the block 20 of figure 2, are described for the sake of simplicity.

The steps related to the generation of the control variable ADAPT are represented by steps b.9)...b.13 and are only shown schematically by the block 25 of figure 2.

In order to determine the control variable CTRL, the method according to the invention provides for the following steps:

c.17) acquiring said first and second control signals DEN1 and NUM1;

c.18) feeding said signal DEN1 to a D/A converter 23;

c.19) feeding said second signal NUM1 and the output of said D/A converter 23 to a comparator 24;

c.20) using the output U/D of said comparator 24 as control signal for a counter 21. Said counter 21 receives in input a clock signal CLK and generates in output the control variable CTRL;

c.21) returning said control variable CTRL, represented by the output of the counter, in input to said D/A converter.

The sign of the variable CTRL depends on the sign of the signal DEN1. The steps of the process according to the invention for generating the variable CTRL are particularly advantageous in that they allow to filter out pop noise.

As already mentioned, the control variable ADAPT is determined by means of the steps b.9)...b.13) similar to those described for the variable CTRL.

As described above the control variables CTRL and ADAPT are used to determine a third control variable SIN_D (step d). This occurs by virtue of the following sequence of steps:

d.1) addressing first memory means 50 by virtue of said control variables CTRL and ADAPT;

d.2) feeding said first memory means 50 with signals which represent the operating state of the inverter (particularly the signal CONFIG);

d.3) extracting from said first memory means 50 a predefined value of said control variable SIN_D.

In practice, the control variables ADAPT and CTRL and the control signals CONFIG and CONFIG2 are used to select a predefined value of the control variable SIN_D according to a previously stored relation. In other words, $SIN\_D = f(X1, Y1)$, where in this case the inputs X1 and Y1 of the first memory means 50 are X1=ADAPT and Y1=CTRL . The relation that is stored depends substantially on the operating state of the inverter and therefore on the value of the signal CONFIG and on the values taken by the variables CTRL and ADAPT.

During operation with the inverter connected to the power distribution network (CONFIG = 1), if the power source is non-rechargeable the variable CTRL always has a positive sign, since in this case power flows from the power source to the network. As mentioned, the variable CTRL determines the ratio (IFV/VCOND) and this allows to find the maximum power point simply by setting CTRL = (1/RESGEN) , where RESGEN is, in practice, the value of the differential resistance of the power source (particularly if it is a photovoltaic array), calculated starting from the signals IFV and VFV. To allow this to occur in practice, it is necessary to obtain in real time the variable SIN_D that represents the load angle and the voltage that the inverter must produce at the input of the main output transformer.

The following relation accordingly applies:

$$ILAC = VLAC \cdot \frac{tgD}{XT} \qquad (3)$$

where D is the load angle and XT is the reactance of the transformer.

Therefore one can write:

$$VCOND^2 \cdot CTRL = COND \cdot IFV = VLAC \cdot ILAC = VLAC \cdot \frac{VLAC^2}{XT} \cdot tgD \qquad (4)$$

from which

$$tgD = ADAPT^2 \cdot CTRL \cdot XT \qquad (5)$$

since $ADAPT = (VCOND/VLAC)$ .

Therefore, in the case of an inverter connected to the power distribution network with a non-rechargeable source, the relation to be stored beforehand in the first memory means 50 is:

$$SIN\_D = f(X1, Y1) = Y1 \cdot X1^2 \cdot XT \qquad (6)$$

During operation with the inverter connected to the power distribution network (CONFIG = 1), if the source is rechargeable the criterion to be implemented depends substantially on the sign of CTRL.

In the case of power flow from the source to the network, therefore, the sign of CTRL is positive and the relation $SIN\_D = (X1, Y1)$ to be implemented in the first memory means 50 is the relation (6) obtained earlier.

In the case of power flow from the network to the source, one has:

$$tgD = \frac{ILAC \cdot XT}{VLAC} = (VLAC \cdot CTRL) \cdot \frac{XT}{VLAC} = CTRL \cdot XT \tag{7}$$

since in this case $ILAC = (VLAC.CTRL)$ .

In the case of power flow from the network to the source, therefore, the relation $SIN\_D = (X1, Y1)$ to be implemented in the first memory means 50 is:

$$SIN\_D = f(X1, Y1) = Y1 \cdot XT \tag{8}$$

During operation with the inverter connected to an isolated load (CONFIG = 0), on the basis of observations similar to the above ones, one has:

$$SIN\_D = f(X1, Y1) = Y1 \tag{9}$$

As described above, the control variable SIN_D is used, together with the control variable ADAPT and with the signal CONFIG, to determine a fourth control variable PART (step e)). This determination occurs in a manner which is substantially identical to the one described above for step d). Predefined values of the control variable PART are extracted from second memory means 51 according to a previously stored relation. That is to say, $SIN\_D = g(X2, Y2)$ , where in this case the inputs X2 and Y2 for addressing the second memory means 51 are $X2 = ADAPT$ and $Y1 = SIN\_D$ .

During operation with the inverter connected to the power distribution network (CONFIG = 1), for example, one has:

$$PART = g(X2, Y2) = \frac{1}{X2} \cdot \frac{2}{1 - Y2^2} \tag{10}$$

and during operation with the inverter connected to an isolated load (CONFIG = 0) one has:

$$PART = g(X2, Y2) = \frac{Y2}{X2}. \tag{11}$$

The angle of the fundamental sinusoidal characteristic curve of the output voltage of said inverter is determined (step f))according to the following steps, if the inverter is connected to the power distribution network:

f.1) feeding the control variable SIN_D to the D/A converter 10;
f.2)feeding a reference signal REF to the D/A converter 10.

The signal REF is obtained by rectifying and filtering the signal VLAC if the inverter is connected to the power distribution network, whereas in the case of an isolated inverter connection REF = 0;

f.3) feeding the output UD of said D/A converter 10 to a comparator 11. The signal UD represents the load angle of the inverter, which in particular can have, for example, a positive or negative sign and can vary in the angular interval [-45°, 45°] so as to prevent synchronization loss;
f.4) feeding said comparator with a reference signal VLAC* obtained by virtue of converter means 37. Converter means 37 acquire in input the signal VLAC, if, as mentioned, the inverter is connected to the power distribution network. Accordingly the following steps then:
f.5) using the output signal of the comparator for a circuit of the PLL (phase locked loop) type 12;
f.6) using the output of said PLL circuit 12 as a control signal for a counter 13. The output of said counter 13 is (step
f.7) the value of the angle SHAPE of the fundamental sinusoidal curve.

On the other side, if the inverter is connected to an insulated load the provided steps comprised in said step f) are the following:

f.8) feeding the control variable SIN_D to the D/A converter 10;
f.9)feeding a reference signal REF to the D/A converter 10.
f.10) feeding the output UD of said D/A converter 10 to a comparator 11.

f.11) feeding said comparator with a reference signal VLAC* obtained by virtue of converter means 37. Converter means 37 are instead cascade-connected to an oscillator 36 if the inverter is connected to an isolated load. In practice, the signal VLAC* is a reconstruction of the signal VLAC in the angular interval [-45°, 45°];

f.12) using the output signal of the comparator for a circuit of the PLL (phase locked loop) type 12;

f.13) using the output of said PLL circuit 12 as a control signal for a counter 13. The output of said counter 13 is (step f.14) the value of the angle SHAPE of the fundamental sinusoidal curve.

The angle SHAPE of the fundamental sinusoidal curve and the control variable PART are used to determine, as described above in step g), predefined duty-cycle values (designated by PWM in figure 2) extracted (step g.2) from suitably third memory means 52 (step g.1) according to a previously stored relation.

That is to say, PWM = h (X3, Y3), where in this case the inputs X1 and Y1 for addressing the third memory means 52 are X3=PART and Y3=SHAPE.

For example, the relation to be stored can be:

$$PWM = h(X3,Y3) = X3 \cdot \sin(Y3). \tag{12}$$

In practice it has been found that the control method according to the invention allows to achieve the intended aim and objects.

In fact, it allows both to obtain a bi-directional flow of power from a DC power source, connected to the inverter, and the power distribution network, and to supply an insulated load.

In particular, the methid according to the present invention allows where possible, to recharge the DC power source connected to the inverter and to provide for a network power recovery.

The control method, according to the invention, has proven to be suitable for the optimum management of any kind of power source, in particular for those sources characterised by large variations of output current/voltage.

Thanks to the described management of the reactive power the control method, according to the invention, allows to improve effectively the harmonic content of the output voltage at the delivery point.

Finally, the control method, according to the invention, has proven to be of easy implementation with a simple control unit that can be easily performed using devices, commercially available.

The method thus conceived is susceptible of numerous modifications and variations, all of which are within the scope of the inventive concept; all the details may furthermore be replaced with other technically equivalent ones.

In particular, the signals cited in the description of the method according to the invention can be analog and/or digital and all the described processing operations can be implemented by means of analog and/or digital technologies.

**Claims**

1.    A control method for a constant-frequency inverter for supplying isolated loads and/or for exchanging power between a DC power source and the power distribution network, said inverter being connected to said DC power source and having an output transformer and switching means for generating a voltage in output from said inverter, characterised in that it comprises the following steps:

a) acquiring signals which represent the operating state of the inverter, said operating state of the inverter being definable between the following possible configurations:

-    said inverter is connected to the power distribution network;
-    said inverter is connected to an isolated load;

b) determining a first control variable aimed to address first and second memory means, said first control variable being determined by virtue of the execution of the following steps:

-    generating a first control signal which is dependent on the operating state of the inverter;
-    generating a second control signal which is dependent on the operating state of the inverter;

c) determining a second control variable aimed to address said first memory means, said second control variable being determined by virtue of the execution of the following steps:

-    generating a third control signal which is dependent on the operating state of the inverter;
-    generating a fourth control signal which is dependent on the operating state of the inverter;

d) determining a third control variable based on said first and second control variables;

e) determining a fourth control variable based on said first and third control variables;

f) determining, based on said third variable, the value of the angle of the fundamental sinusoidal characteristic curve of the voltage downstream of said switching means comprised in said inverter;

g) determining a duty-cycle value for controlling said switching means based on said fourth control variable and on said value of the angle of the fundamental sinusoidal curve.

2. A control method according to claim 1, characterised in that it comprises the following steps:

a) acquiring signals which represent the operating state of the inverter, said operating state of the inverter being definable between the following possible configurations:

- said inverter is connected to the power distribution network;
- said inverter is connected to an isolated load;

    a.1) acquiring signals which represent the type of said DC power source, said type being definable between the following possible configurations:

- said DC power source is of the rechargeable type;
- said DC power source is of the non-rechargeable type;

b) determining a first control variable aimed to address first and second memory means, said first control variable being determined by virtue of the execution of the following steps:

- generating a first control signal which is dependent on the operating state of the inverter and/or on the type of the power source;
- generating a second control signal which is dependent on the operating state of the inverter and/or on the type of the power source;

c) determining a second control variable aimed to address said first memory means, said second control variable being determined by virtue of the execution of the following steps:

- generating a third control signal which is dependent on the operating state of the inverter and/or on the type of the power source;
- generating a fourth control signal which is dependent on the operating state of the inverter and/or on the type of the power source;

d) determining a third control variable based on said first and second control variables;

e) determining a fourth control variable based on said first and third control variables;

f) determining, based on third control variable, the value of the angle of the fundamental sinusoidal characteristic curve of the voltage downstream of said switching means comprised in said inverter;

g) determining a duty-cycle value for controlling said switching means on the basis of said fourth control variable and of said value of the angle of the fundamental sinusoidal curve.

3. A control method according to claim 2, characterised in that said step b) comprises, in said step for generating said first control signal, if the inverter is connected to the power distribution network, the steps that consist in:

b.1) acquiring a signal which represents the output voltage of the inverter;

b.2) rectifying and filtering the signal acquired in step b.1);

b.3) using the signal generated in step b.2) as the first control signal in order to determine said first control variable.

4. A control method according to claim 2, characterised in that said step b) comprises, in said step that consists in generating said second control signal, if the inverter is connected to the power distribution network, the step of:

b.4) performing a fine adjustment of the reactive power absorbed by said inverter.

5. A control method according to claim 4, characterised in that said step b.4) comprises the following steps:

b.4.1) acquiring signals which represent the output voltage of the inverter and of the output current;

b.4.2) phase shifting the signal that represents the output current of the inverter;

b.4.3) determining a signal which represents the value of the reactive power;

b.4.4) determining an error signal by adding the signal determined in step b.4.3) to a reference signal;

b.4.5) integrating said error signal, generating a control signal which represents the reactive power absorbed by the inverter;

b.4.6) monitoring the behavior of the signal generated in step b.4.5);

b.4.7) disconnecting the inverter if said signal generated in step b.4.5) exceeds a preset threshold;

b.4.8) generating said second control signal, acquiring and correcting a signal which represents the voltage upstream of said switching means with the signal generated in step b.4.5), if said signal generated in step b.4.5) does not exceed a preset threshold.

6. A control method according to claim 2, characterised in that said step b) comprises, in said step that consists in generating said first control signal, if the inverter is connected to an isolated load, the following steps:

b.5) acquiring a reference signal;

b.6) using the signal acquired in step b.5) as a first control signal in order to determine said first control variable.

7. A control method according to claim 2, characterised in that said step b) comprises, in said step that consists in generating said second control signal, if the inverter is connected to an isolated load, the following steps:

b.7) acquiring a signal which represents the voltage measured upstream of said switching means;

b.8) using the signal acquired in step b.7) as second control signal in order to determine said first control variable.

8. A control method according to claim 2, characterised in that said step c) comprises, in said step that consists in generating said third control signal, if the inverter is connected to the power distribution network and to a rechargeable source, the following steps:

c.1) acquiring a reference signal;

c.2) using the signal generated in step c.1) as said third control signal for determining said second control variable.

9. A control method according to claim 2, characterised in that said step c) comprises, in said step that consists in generating said fourth control signal, if the inverter is connected to the power distribution network and to a rechargeable source, the following step:

c.3) performing management of the power supplied by the power distribution network.

10. A control method according to claim 9, characterised in that it comprises, in the step

c.3) the following steps:

c.3.1) defining a reference signal for the maximum power level exchanged between the power distribution network and the load;

c.3.2) acquiring a signal which represents the actual power exchanged between the inverter and the power distribution network;

c.3.3) generating an error signal which represents the difference between said reference value and said value that represents the actual power exchanged between the power distribution network and the load;

c.3.4) integrating said error signal in order to generate a fourth control signal which is suitable to determine said second control variable.

11. A control method according to claim 2, characterised in that said step c) comprises, in said step that consists in generating said third control signal, if the inverter is connected to the power distribution network and to a non-rechargeable source, the following steps:

c.4) acquiring signals which respectively represent the input current of the inverter and the voltage produced by said power source;

c.5) subjecting the signals acquired in step c.4) to high-pass filtering, so as to preserve the alternating components;

c.6) feeding the filtered signal that represents the current to first multiplier means;

c.7) feeding second multiplier means with said filtered signal that represents the voltage and the signal obtained by adding the output signal of said first multiplier means and said filtered signal that represents the voltage;

c.8) integrating the signal in output from said second multiplier means in order to generate said third control signal which is suitable to determine said second control variable, said third control signal being returned in input to said first multiplier means.

12. A control method according to claim 2, characterised in that said step c) comprises, in said step that consists in generating said fourth control signal, if the inverter is connected to the power distribution network and to a non-rechargeable source, the following steps:

c.9) generating a reference signal;

c.10) using said reference signal as said fourth control signal for determining said first control variable.

13. A control method according to claim 2, characterised in that said step c) comprises, in said step that consists in generating said third control signal, if the inverter is connected to an isolated load, the following steps:

c.11) acquiring a reference signal;

c.12) using the signal acquired in step c.11) as said third control signal for determining said second control variable.

14. A control method according to claim 2, characterised in that said step c) comprises, in said step that consists in generating said fourth control signal, if the inverter is connected to an isolated load, the following steps:

c.13) acquiring a signal which represents the output voltage of said inverter;

c.14) rectifying and filtering the signal acquired in step c.13);

c.15) adding the signal generated in step c.14) to a reference signal, obtaining an error signal;

c.16) integrating said error signal, generating a signal used as said fourth control signal in order to determine said second control variable.

15. A control method according to claim 2, characterised in that said step b) comprises the following steps:

b.9) acquiring said first and second control signals;

b.10) feeding said first control signal to a D/A converter;

b.11) feeding said second control signal and the output of said D/A to a comparator;

b.12) using the output of said comparator as a control signal for a counter, said counter receiving in input a clock signal and generating in output said first control variable;

b.13) returning said first control variable in input to said D/A converter.

16. A control method according to claim 2, characterised in that said step c) comprises the following steps:

c.17) acquiring said first and second control signals;

c.18) feeding said first control signal to a D/A converter;

c.19) feeding said second control signal and the output of said D/A converter to a comparator;

c.20) using the output of said comparator as a control signal for a counter, said counter receiving in input a clock signal and generating in output said second control variable;

c.21) returning said second control variable in input to said D/A converter.

17. A control method according to one or more of the previous claims, characterised in that said step d) comprises the following steps:

d.1) addressing said first memory means by virtue of said first and second control variables;

d.2) feeding said first memory means with signals which represent the operating state of the inverter;

d.3) extracting from said first memory means a value of said third control variable, according to a preset relation.

18. A control method according to one or more of the previous claims, characterised in that said step e) comprises the following steps:

    e.1) addressing said second memory means by virtue of said first and third control variables;
    e.2) feeding said second memory means with signals which represent the operating state of the inverter;
    e.3) extracting from said second memory means a value of said fourth control variable according to a preset relation.

19. A control method according to one or more of the previous claims, characterised in that, if the inverter is connected to the power distribution network, said step f) comprises the following steps:

    f.1) feeding said third control variable to a D/A converter;
    f.2) feeding said D/A converter with a reference signal obtained by rectifying and filtering the output voltage of the inverter;
    f.3) feeding the output of said D/A converter to a comparator;
    f.4) feeding said comparator with a reference signal obtained by virtue of converter means, said converter means acquiring a signal which represents the output voltage of the inverter;
    f.5) using the output signal of the comparator for a circuit of the PLL (phase locked loop) type;
    f.6) using the output of said PLL circuit as control signal for a counter;
    f.7) using the output of said counter as value of the angle of the fundamental sinusoidal curve.

20. A control method according to one or more of claims from 1 to 18, characterised in that, if the inverter is connected to an isolated load, said step f) comprises the following steps:

    f.8) feeding said third control variable to a D/A converter;
    f.9) feeding a reference signal to said D/A converter;
    f.10) feeding the output of said D/A converter to a comparator;
    f.11) feeding said comparator with a reference signal obtained by virtue of converter means, said converter means being cascade-connected to an oscillator;
    f.12) using the output signal of the comparator for a circuit of the PLL (phase locked loop) type;
    f.13) using the output of said PLL circuit as control signal of a counter;
    f.14) using the output of said counter as value of the angle of the fundamental sinusoidal curve.

21. A control method according to one or more of the previous claims, characterised in that said step g) comprises the following steps:

    g.1) addressing third memory means by virtue of said fourth control variable and said value of the angle of the fundamental sinusoidal curve;
    g.2) extracting from said third memory means a value of said duty-cycle value for controlling said switching means, according to a predefined relation.

22. A control device for constant-frequency inverters for supplying isolated loads and/or exchanging power between a DC power source and the power distribution network, characterised in that it implements a control method according to one or more of the previous claims.

23. A constant-frequency inverter for supplying isolated loads and/or exchanging power between a DC power source and the power distribution network, having at least one DC power source, an output transformer and switching means for generating a voltage in output from said inverter, characterized in that it comprises a control device according to claim 22.

Fig.1

FIG. 2